# EUROPÄISCHE PATENTSCHRIFT

(11) **EP 2 325 972 B1**
(45) Veröffentlichungstag und Bekanntmachung des Hinweises auf die Patenterteilung: **28.02.2018**
(21) Anmeldenummer: 10188200.9
(22) Anmeldetag: 20.10.2010
(51) Int. Cl.: H02J 7/00, H01M 10/44, H01M 10/42, H01M 10/48, H01H 5/02, H01H 9/54, H01H 15/02

(54) **Vorrichtung zum Betreiben einer Akkumulatoreinheit**
Device for operating an accumulator unit
Dispositif destiné au fonctionnement d'une unité d'accumulateur

(30) Priorität: 20.10.2009 DE 102009045865
(43) Veröffentlichungstag der Anmeldung: 25.05.2011
(73) Patentinhaber: Hoppecke Advanced Battery Technology GmbH, 08056 Zwickau (DE)
(72) Erfinder: Lehmann, Gerhard, 79367, Weisweil (DE)
(74) Vertreter: Vogel, Andreas

(56) Entgegenhaltungen:
- EP-A2- 1 052 662
- US-A1- 2003 160 593
- US-A1- 2005 068 005
- US-A1- 2009 066 291
- US-B1- 6 249 063

## Beschreibung

Die Erfindung betrifft eine Vorrichtung zum Betreiben, insbesondere zum Laden und/oder Entladen einer Akkumulatoreneinheit, die mehrere, in einem Zellverbund vorgesehenen Zellen aufweist sowie ein dazugehöriges Verfahren zum Betrieb dieser Akkumulatoreinheit.
Es ist bekannt, dass moderne Akkumulatoreinheiten eine Vielzahl von Zellen aufweisen. Derartige Akkumulatoreinheit, insbesondere Batterien können dabei lineare Abmessungen von bis zu 10 m zu haben, wobei sich im Raum mehrere solcher Akkumulatoreinheit befinden können. Derartige Akkumulatoreinheiten oder Batteriespeicher können sich beispielsweise dadurch auszeichnen, dass die einzelnen Zellen, insbesondere Batteriezellen auf ihre physikalischen Eigenschaften und Betriebsparameter hin voneinander unabhängig überwacht werden können und sollen. Dieses kann einerseits eine Optimierung der Lade-und Entladevorgänge der Zellen ermöglichen und andererseits ermöglichen, schadhafte Zellen schnell zu erkennen und frühzeitig auszutauschen.

Nachteiligerweise hat sich gezeigt, dass die einzelnen Zellen, die oft in Reihenschaltung innerhalb der Akkumulatoreinheit angeordnet sind, mit Fertigungstoleranzen behaftet sind, so dass ihre Kapazität Abweichungen gegenüber der Nennkapazität aufweist. Im Betrieb können einzelne Zellen ebenfalls unterschiedlich altern, so dass sich eine zusätzliche Betriebstoleranz ergibt. Aufgrund unterschiedlicher Betriebstemperaturen und je nach Art der Akkumulatoreinheit, kann die Selbstentladerate in einigen Zellen höher sein als in anderen Zellen. Bei ständigem Entladen und Laden der Zellen kann es deshalb zu Ladezustands- und Kapazitätsabweichungen kommen, so dass die Zellen geringster Kapazität das Entladeende erreichen, während andere Zellen der gleichen Akkumulatoreinheit noch genügend geladen sind. Bei hoher Belastung kann es daher beim Entladeende zu einer totalen Entladung einzelner Zellen der Akkumulatoreinheit mit anschließender Potenzialumkehr bzw. -umpolung kommen. Dadurch können die Zellen irreparabel geschädigt werden. Beim Ladevorgang werden dagegen die Zellen mit geringerer Kapazität zuerst aufgeladen, während andere Zellen noch nicht den Endpunkt der Ladung erreicht haben. Das Ladungsende der zuerst voll geladenen Energiezelle wird nicht festgestellt, so dass diese Zellen dann überladen werden und je nach Art der verwendeten Akkumulatoreinheit Schädigungen durch die Überladung auftreten können.

Eine mögliche Lösung bietet das Balancing-Verfahren. Hierbei ist eine Bypass-Leitung mit mindestens einem Widerstand pro Zelle vorgesehen, wobei Ladungsenergie an der Bypass-Leitung der bereits aufgeladenen Zelle vorbeigeführt wird. Neben der hohen Wärmeentwicklung entstehen hierdurch große Ladungsverluste, so dass das Balancing-Verfahren einen schlechten Gesamtwirkungsgrad, insbesondere beim Laden der Akkumulatoreinheit aufweist.

Es ist des Weiteren bekannt, eine wiederaufladbare Akkumulatoreinheit während ihres Ladevorgangs zu überwachen. Zu den überwachenden Betriebsparametern gehört die Temperatur und/oder ein aktueller Ladezustand der Akkumulatoreinheit. Das Überwachen derartiger Betriebsparameter dient zur optimalen Steuerung des Ladevorgangs, so dass dieser beispielsweise möglichst schnell und batterieschonend erfolgt. Ebenfalls dient das Überwachen des Ladevorgangs einer Akkumulatoreinheit dazu, für eine erhöhte Sicherheit des Ladevorgangs zu sorgen. Das Beachten von Sicherheitsaspekten ist, insbesondere beim Laden von Lithium-Ionen-Akkumulatoreinheiten (LI-Ionen-Batterien), aufgrund der durch Überladen der Akkumulatoreinheiten erzeugten Gefahrenpotentiale, unbedingt erforderlich und besitzt höchste Priorität.

Vorrichtungen zum Laden und/oder Entladen von Akkumulatoreneinheiten, die aus mehreren Zellen zusammengesetzt sind, sind z. B. aus US 2003/0160593 A1, US 2005/0068005 A1 und US 2009/0066291 A1 bekannt. Bei diesen Vorrichtungen ist für jede Zelle eine Überwachungsschaltung vorsehen. Allerding sind die bekannten Überwachungsschaltungen mit einfachen "Ein und Aus"-Schaltern ausgebildet.

Der Erfindung liegt daher die Aufgabe zu Grunde, eine Vorrichtung sowie ein Verfahren zum Betrieb einer Akkumulatoreinheit zu schaffen, bei denen die oben genannten Nachteile vermieden werden, insbesondere energetische Verluste beim Betrieb der Akkumulatoreinheit verringert werden können.

Die Erfindung wird mit den Merkmalen des Anspruchs 1 gelöst. In den abhängigen Patentansprüchen sind mögliche Ausführungsformen beschrieben.

Erfindungsgemäß ist vorgesehen, dass mindestens eine Überwachungsschaltung vorgesehen ist, die mindestens einen Betriebsparameter jeder Zelle überwacht, in Abhängigkeit vom Betriebsparameter die Überwachungsschaltung zwischen einem ersten Schaltzustand und einem zweiten Schaltzustand bringbar ist, in dem ersten Schaltzustand alle Zellen einen gemeinsamen Strompfad bilden und in dem zweiten Schaltzustand mindestens eine Zelle aus dem Zellverbund energetisch getrennt ist. Erfindungsgemäß kann durch die Überwachungsschaltung ein effizienter Betrieb der Akkumulatoreinheit erzielt werden, wobei die Überwachungsschaltung anhand der Betriebsparameter der jeweiligen Zelle entscheidet, welche Zellen der Akkumulatoreinheit im Zellverbund geschaltet sind, das bedeutet, welche Zellen in Reihe zu schalten sind und somit einen gemeinsamen Strompfad bilden. Anhand der Betriebsparameter wählt die Überwachungsschaltung anhand festgelegter Kriterien Zellen der Akkumulatoreinheit aus, um diese aus dem Zellverbund energetisch zu trennen. Die Betriebsparameter, die aktuell zeitnahe Zustandsinformationen der jeweiligen Zelle wiedergeben, können beispielsweise die Zellenspannung und/oder Zellentemperatur und/oder Ladezustand und/oder Kapazität und/oder Ladestrom und/oder Entladestrom sein. Vorteilhafterweise werden durch die Überwachungsschaltung die Betriebsparameter mit gespeicherten Vergleichbetriebsparametern verglichen, die beispielweise gewisse Grenzwerte darstellen. Falls ein Betriebsparameter einer Zelle einen Grenzwert erreicht hat, wird über die Überwachungsschaltung diese Zelle aus dem Zellverbund energetisch getrennt oder wieder in den Zellverbund zugeschaltet. Der wesentliche Kern dieser Erfindung ist, dass während der Änderung des Schaltzustandes der Überwachungsschaltung alle Zellen des Zellverbundes ohne Unterbrechung bestromt sind, wobei gleichzeitig energetische Verluste und unnötige Wärmeentwicklungen, beispielsweise durch Widerstände, die im Stand der Technik im Balancing-Verfahren zum Einsatz kommen, gering gehalten werden können.

Erfindungsgemäß ist zudem vorgesehen, dass jeder Zelle eine Überwachungsschaltung mit jeweils einer Schutzschaltung zugeordnet ist, die bei einem Wechsel zwischen dem ersten Schaltzustand und dem zweiten Schaltzustand aktivierbar ist, wobei die Zelle, bei der die Schutzschaltung aktiviert ist, vom restlichen Zellverbund getrennt ist und gleichzeitig der Strompfad des restlichen Zellverbundes aufrechterhalten ist. Zweckmäßigerweise weist die Schutzschaltung einen Energiespeicher auf, der bei einem Wechsel zwischen dem ersten Schaltzustand und dem zweiten Schaltzustand der Überwachungsschaltung kurzzeitig im Strompfad des Zellverbundes liegt. Hierbei weist die Schutzschaltung ein Schaltelement auf, das zwischen einer Offenstellung und einer Schließstellung schaltbar ist. Vorteilhafterweise befindet sich im ersten Schaltzustand und/oder im zweiten Schaltzustand der Überwachungsschaltung das Schaltelement in einer Offenstellung und bei einem Wechsel zwischen dem ersten Schaltzustand und dem zweiten Schaltzustand der Überwachungsschaltung das Schaltelement in der Schließstellung, wodurch der Energiespeicher überbrückt ist.

In einer möglichen Ausführungsalternative ist hierbei der Energiespeicher als Kondensator ausgeführt, parallel hierzu kann das Schaltelement angeordnet sein. Das Schaltelement ist vorteilhafterweise mit einer variabel einstellbaren Spannung ausgeführt. Vorteilhafterweise ist das Schaltelement als Transistor ausgebildet. Entscheidet die Überwachungsschaltung, eine Zelle aus dem Zellverbund zu trennen, erfolgt eine Überführung der Überwachungsschaltung vom ersten Schaltzustand in den zweiten Schaltzustand. Hierbei entsteht eine Spannungsüberhöhung, in positiver Richtung bei Ladebetrieb und in negativer Richtung beim Entladebetrieb. Der Energiespeicher dient hierbei zur Unterstützung des Transistors, wobei der Energiespeicher kurzzeitig im Strompfad des Zellverbundes liegt und somit zumindest einen Teil der Spannungsspitze aufnehmen kann. Während der Überführung der Überwachungsschaltung von dem ersten Schaltzustand in den zweiten Schaltzustand wird der Energiespeicher durch die kurzzeitige Spannungsüberhöhung aufgeladen. Somit ist ein Stromfluss durch die restlichen Zellen des Zellverbundes ohne Unterbrechung realisierbar. Innerhalb von wenigen Millisekunden wird das Schaltelement in seine Schließstellung gebracht, wodurch der Energiespeicher, insbesondere der Kondensator, überbrückt ist und das Schaltelement im Strompfad des restlichen Zellverbundes liegt.

Bei den Vergleichsbetriebsparametern kann es sich beispielsweise um die Grenzwerte von folgenden Größen handeln: Kapazität, Ladestrom, Entladestrom, Temperatur, Spannung der jeweiligen Zelle. Des Weiteren kann vorgesehen sein, dass die einzelne Zelle und die Überwachungsschaltung in einem gemeinsamen Bauteil integriert sind. Das bedeutet, dass jede Zelle mit den restlichen Zellen direkt kommunizieren kann und untereinander die jeweiligen Betriebsparameter austauschen kann. Die einzelne Zelle kann des Weiteren selbst entscheiden, inwieweit sie aus dem Zellverbund getrennt werden soll oder wieder in den Zellverbund eingereiht werden soll.

Alternativ kann eine zentrale Kontrolleinheit vorgesehen sein, die mit allen Zellen verbunden ist, so dass die Kontrolleinheit die jeweiligen Betriebsparameter jeder Zelle auslesen kann. Diese zentrale Kontrolleinheit kann anhand der aktuellen Betriebsparameter und in Abhängigkeit von den gespeicherten Vergleichsbetriebsparametern entscheiden, welche Zellen in dem in Reihe geschalteten Zellverbund geschaltet werden sollen, bzw. welche Zellen aus dem Zellverbund separiert oder energetisch getrennt werden sollen.

Die Betriebsparameter können der zentralen Kontrolleinheit oder der Überwachungsschaltung der restlichen Zellen im Zellverbund optisch und/oder über Funk und/oder über wenigstens einen Lichtwellenleiter übertragen werden. Der Lichtwellenleiter kann beispielsweise eine Plastikfaser sein. Hinsichtlich der Lichtwellenleiter sind beispielsweise Multimode- oder Singlemode-Fasern denkbar. Die Lichtwellenleiter gemäß der vorliegenden Erfindung können vorzugsweise mit einer Übertragungsstrecke ausgeführt sein, die einen optischen Sender, ein Glasfaserkabel, insbesondere mit Repeatern zur Nachverstärkung und Signalregeneration sowie einen optischen Empfänger aufweisen. Die optischen Sender können beispielsweise LEDs oder Laserdioden sein. Die optischen Empfänger können beispielsweise als PIN-Dioden oder Avalanche-Dioden ausgeführt sein.

Die Übertragung der Betriebsparameter kann über wenigstens eine der folgenden Technologien erfolgen:
- Funk: Bluetooth, Near Field Communination (NFC), Wireless Local Area Network (WLAN), WiMAX, Wireless USB, ZigBee (IEEE 802.15.4), Wibree, WPAN, GSM, GPRS, UMTS, HSCSD oder HSDPA
- induktive Datenübertragung, kapazitive Datenübertragung,
- optische Freiraumübertragung: Infrared Data Association (IrDA), FSO (Free Space Optics),
- Übertragung über Lichtwellenleiter

Vorteilhafterweise erfolgt die Übertragung über ZigBee. ZigBee stellt einen Protokollstapel dar, der es ermöglicht eine energiesparende Datenübertragung, insbesondere in einem Bereich von 10m bis 100m zu ermöglichen. Dabei kann der Protokollstapel auf den IEEE 802.15.4 Standard aufgesetzt werden, der die unteren beiden Schichten des ISO/OSI-Modells spezifiziert. ZigBee bietet im Gegensatz zu anderen Funktechnologien wie z.B. Bluetooth den Vorteil, dass eine energetische Versorgung einer ZigBee-Einheit, innerhalb der Überwachungsschaltung und/oder der einzelnen Zelle zwischen 6 Monaten und 2 Jahren erreicht werden kann.

Es kann zweckmäßigerweise vorgesehen sein, dass das Protokoll zur Übertragung der Betriebsparameter über den ZigBee-Standard erfolgt, wobei die physikalische Übertragung des Informationsgehaltes der Betriebsparameter optisch erfolgt, insbesondere über den IrDA-Standard erfolgt. Dies ermöglicht ein größeres Spektrum an Möglichkeiten, in dem eine Übertragung über Funk nicht erwünscht ist. Dies kann z.B. für eine erhöhte erforderliche Abhörsicherheit der Fall sein. Somit kann ZigBee als Grundlage der optischen Übertragung verwendet werden, wodurch ebenfalls ein Kostenvorteil gegenüber funkbasierter Komponenten erzielt werden kann.

Jede Zelle kann beispielsweise ein Speicherelement aufweisen, in dem die jeweiligen Betriebsparameter und/oder Vergleichsbetriebsparameter gespeichert sind. Ebenfalls ist es denkbar, dass in diesem Speicher der Zelle die Betriebsparameter der übrigen Zellen des Zellverbundes gespeichert werden können.

In einer die Erfindung verbessernden Maßnahme kann vorgesehen sein, dass die Überwachungsschaltung einen zentralen Schalter aufweist, mit dem die Überwachungsschaltung zwischen dem ersten Schaltzustand und dem zweiten Schaltzustand bringbar ist. Hierbei kann der zentrale Schalter als Halbleiter oder Relais ausgeführt sein. Ebenfalls ist es denkbar, dass der zentrale Schalter ein Kontaktelement und eine Kontaktfläche aufweist, entlang dieser das Kontaktelement verschiebbar gelagert ist. Die Kontaktfläche weist vorzugsweise unterschiedliche Einzelkontaktflächen auf, die zueinander beabstandet sind. Das Kontaktelement kann hierbei zwischen einer ersten und einer zweiten Position bewegt werden, wobei in dem ersten Schaltzustand der Überwachungsschaltung das Kontaktelement die erste Position hat und in dem zweiten Schaltzustand der Überwachungsschaltung das Kontaktelement die zweite Position hat.

Vorteilhafterweise wird das Kontaktelement über einen Antrieb bewegt. Der Antrieb kann beispielsweise ein Elektromotor, ein Piezomotor, ein Linearmotor oder ein Magnetschalter sein. Vorteilhafterweise weist der zentrale Schalter Magnetelemente auf, die am Kontaktelement und/oder an der Kontaktfläche angeordnet sind. Bei den Magnetelementen kann es sich um Permanentmagnete handeln, die im Kontaktelement und/oder in der Kontaktfläche, insbesondere in den Einzelkontaktflächen integriert sind. Hierbei kann der zentrale Schalter jeweils direkt in der Zelle der Akkumulatoreinheit integriert sein und mit dieser eine konstruktive Einheit bilden.

Diese besondere Ausführungsform des zentralen Schalters weist einen hohen Kontaktdruck in jeder Position des Kontaktelementes auf, welches durch die Magnetelemente erzielbar ist. Zudem weist die Gesamtanordnung einen geringen elektrischen Widerstand auf, wobei hohe Ströme am zentralen Schalter anliegen können. Neben der hohen Strombelastbarkeit des zentralen Schalters können die Schaltzustände der Überwachungsschaltung, insbesondere die Positionen des Kontaktelementes stabil und sicher eingehalten werden, ohne das zur Beibehaltung des Schaltzustandes elektrische Energie notwendig ist. Um eine leichte Verschiebbarkeit des Kontaktelementes an der Kontaktfläche zu gewährleisten, kann mindestens eine Oberfläche des Kontaktelementes und/oder der Kontaktfläche entsprechend beschichtet sein. Nach der Überwindung der Reibung zwischen Kontaktelement und Kontaktfläche kann somit eine leichte Verschiebbarkeit des Kontaktelementes entlang der Kontaktfläche erreicht werden.

Um die Akkumulatoreinheit, insbesondere die Zellen der Akkumulatoreinheit laden zu können, ist vorteilhafterweise ein Ladegerät mit der Überwachungsschaltung verbunden. Eine Entladung der Akkumulatoreinheit erfolgt beispielsweise durch einen mit der Überwachungsschaltung verbundenen Verbraucher.

Die Aufgabe der vorliegenden Erfindung wird des Weiteren durch ein Verfahren mit den Merkmalen des Anspruchs 12 gelöst. Hierbei weist das Verfahren zum Betrieb, insbesondere zum Laden und/oder zum Entladen einer Akkumulatoreinheit, die mehrere, in einem Zellverbund vorgesehene Zellen aufweist, mindestens eine Überwachungsschaltung auf, die mindestens einen Betriebsparameter jeder Zelle überwacht, in Abhängigkeit vom Betriebsparameter die Überwachungsschaltung zwischen einem ersten Schaltzustand und einem zweiten Schaltzustand bringt, in dem ersten Schaltzustand alle Zellen einen gemeinsamen Strompfad bilden und die Überwachungsschaltung in ihrem zweiten Schaltzustand mindestens eine Zelle aus dem Zellverbund energetisch trennt. Hierbei kann beim Laden der Akkumulatoreinheit die Überwachungsschaltung derart betrieben werden, dass jede Zelle zusammen mit Zellen gleichen Ladezustands in Reihe geschaltet ist. Erfindungsgemäß kann anfangend mit den Zellen, die einen geringen Ladezustand aufweisen, das Laden betrieben werden, wobei bei einem Erreichen eines nächst höheren Ladezustandes einer mindestens weiteren, noch nicht geladenen Zelle, diese noch nicht geladene Zelle durch die Überwachungsschaltung für das Laden hinzugeschaltet wird. Diese hinzu zu schaltende Zelle weist hierbei den nächst höheren Ladezustand auf.

Des Weiteren ist es denkbar, dass beim Entladen der Akkumulatoreneinheit die Überwachungsschaltung mindestens eine Zelle aus dem Zellverbund trennt, die einen minimalen Ladezustand aufweist. Hierbei kann in einer weiteren Ausführungsform eine Reservezelle vorgesehen sein, die von der Überwachungsschaltung in den Zellverbund hinzugeschaltet wird, wenn die Überwachungsschaltung mindestens eine Zelle aus dem Zellverbund trennt, die einen minimalen Ladezustand aufweist.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine mögliche Vorrichtung mit einer Überwachungsschaltung zur Über- wachung einer Akkumulatoreinheit, insbesondere der in der Akkumulatoreinheit angeordneten Zellen,
- Figur 2a: eine mögliche Ausführungsalternative eines zentralen Schalters einer Überwachungsschaltung, der in einer ersten Position sich befindet,
- Figur 2b: der Schalter gemäß Figur 2a, der sich in der zweiten Position befindet und
- Figur 3: eine vergrößerte Darstellung des zentralen Schalters der Überwachungsschaltung aus Figur 1.

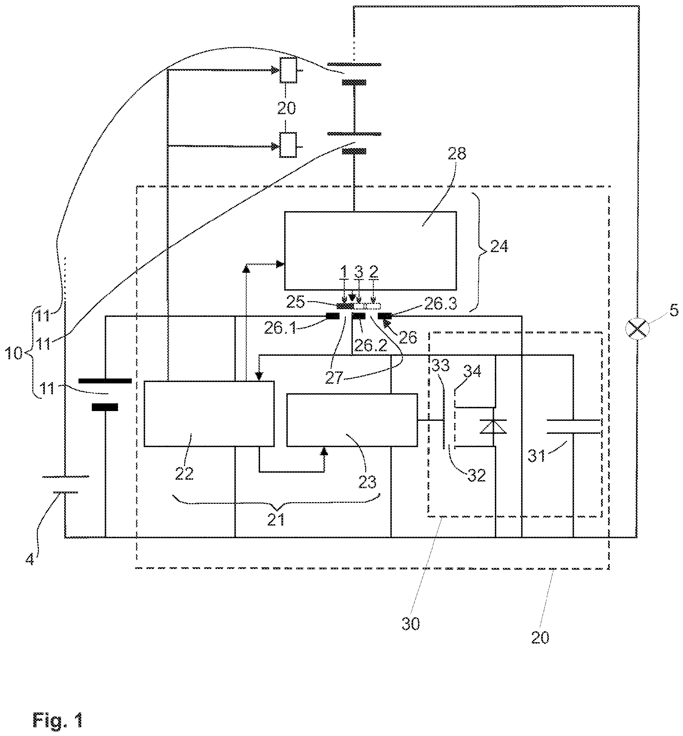

In Figur 1 ist in rein schematischer Darstellung eine Akkumulatoreinheit 10 gezeigt, die aus mehreren Zellen 11 aufgebaut ist. Diese Zellen 11 sind in einem Zellverbund in Reihe geschaltet. Pro Zelle 11 ist eine Überwachungsschaltung 20 vorgesehen, die mindestens einen Betriebsparameter jeder Zelle 11 überwachen kann. Des Weiteren können über die Überwachungsschaltung 20 die Betriebsparameter den benachbarten Überwachungsschaltungen 20 sowie den benachbarten Zellen 11 übergeben werden.

Die Überwachungsschaltung 20 weist einen zentralen Schalter 24 auf, wodurch die Überwachungsschaltung 20 zwischen einem ersten Schaltzustand 1 und einem zweiten Schaltzustand 2 gebracht werden kann. Die Überwachungsschaltung 20 verfügt ein Kontrollelement 21, das zum einen mit den Überwachungsschaltungen 20 der restlichen Zellen 11 innerhalb des Zellverbundes kommunizieren kann, insbesondere Betriebsparameter der Zellen 11 austauschen kann. Des Weiteren kann das Kontrollelement 21 den zentralen Schalter 24 steuern.

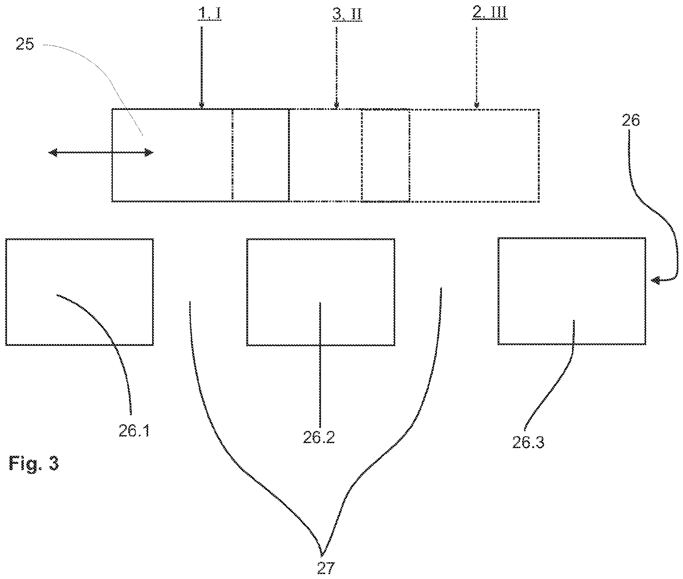

In Figur 1 und Figur 3 ist zu erkennen, dass der zentrale Schalter 24 ein Kontaktelement 25 aufweist, das entlang einer Kontaktfläche 26 bewegt werden kann. Die Kontaktfläche 26 weist drei Einzelkontaktflächen 26.1, 26.2, 26.3 auf, die jeweils untereinander einen Abstand 27 aufweisen. Die Bewegung des Kontaktelementes 25 erfolgt über einen Motor 28. Befindet sich das Kontaktelement 25 in seiner ersten Position I, so ist der erste Schaltzustand 1 der Überwachungsschaltung 20 erreicht. Hierbei kontaktiert das Kontaktelement 25 die Einzelkontaktfläche 26.1 und 26.2 des zentralen Schalters 24. In dem ersten Schaltzustand 1 befindet sich die Zelle 11 in Reihe geschaltet zu den übrigen Zellen 11 des Zellverbundes der Akkumulatoreinheit 10. Um ein effizientes Laden und/oder Entladen der Akkumulatoreinheit 10 zu erzielen, kann über die erfindungsgemäße Überwachungsschaltung 20 erreicht werden, dass unter definierten Kriterien, die von den jeweiligen Betriebsparametern jeder Zelle 11 abhängen, eine oder mehrere Zellen 11 aus dem Zellverbund energetisch getrennt werden. Der Überwachungsschaltung 20 stehen Vergleichsbetriebsparameter zur Verfügung, die minimale und/oder maximale Grenzwerte darstellen. Hierbei können die Betriebsparameter, die von jeder Zelle 11 ermittelt werden, beispielsweise den Ladezustand, Spannung, Temperatur, Kapazität, Ladestrom, Entladestrom wiedergeben, die aktuell die jeweilige Zelle 11 aufweist. Diese aktuellen Betriebsparameter werden mit den Vergleichsbetriebsparametern in Relation gestellt und in Abhängigkeit von den definierten Kriterien kann eine Trennung und/oder eine Hinzufügung der einzelnen Zellen 11 in den Zellverbund der Akkumulatoreinheit 10 über eine entsprechende Ansteuerung des zentralen Schalters 24 erfolgen.

Entscheidet die Überwachungsschaltung 20, dass die Zelle 11 aus dem Reihenzellverbund zu trennen ist, wird das Kontaktelement 25 des zentralen Schalters 24 aus seiner ersten Position I in seine zweite Position II bewegt. Die Überwachungsschaltung 20 verlässt somit ihren ersten Schaltzustand 1 und erreicht ihren zweiten Schaltzustand 2, wenn das Kontaktelement 25 in seiner zweiten Position II sich befindet. Um die Bewegung des Kontaktelementes 25 zu bewirken, steuert das Kontrollelement 21 mit seinem ersten Kontrollelement 22 den Antrieb 28 an, der in Wirkverbindung mit dem Kontaktelement 25 steht. Sobald das Kontaktelement 25 seine Position I verlässt und die Einzelkontaktfläche 26.1 nicht mehr berührt, wird die Zelle 11 vom Reihenverbund der übrigen Zellen 11 getrennt und durch den weiter fließenden Strom entsteht eine Spannungserhöhung, die durch das Kontrollelement 21, insbesondere seines zweiten Kontrollelementes 23 erkannt wird.

Damit der Stromfluss für die restlichen Zellen 11 des Zellverbundes aufrechterhalten wird, ist die Überwachungsschaltung 20 mit einer Schutzschaltung 30 ausgeführt, die bei einem Wechsel zwischen dem ersten Schaltzustand 1 und dem zweiten Schaltzustand 2 aktiviert wird. Die Schutzschaltung 30 weist einen Energiespeicher 31 auf, der als Kondensator ausgeführt ist. Parallel zum Kondensator 31 ist ein Schaltelement 32 angeordnet, das ein Transistor ist. Der Kondensator 31 wird über die genannte Spannungserhöhung, die kurzzeitig während des Schaltens vom ersten Schaltzustand 1 zum zweiten Schaltzustand 2 entsteht, aufgeladen. Während das Kontaktelement 25 sich in Richtung der zweiten Position II bewegt, verfährt das Kontaktelement 25 zunächst lediglich auf der zweiten Einzelkontaktfläche 26.2. Der Kondensator 31 liegt im gemeinsamen Strompfad mit den restlichen Zellen 11 des Zellverbundes, wodurch eine Unterbrechung des Stromflusses durch den Zellverbund der übrigen Zellen wirksam verhindert wird. Der Kondensator 11 unterstützt hierbei den Transistor 32, der bei Erkennung einer Spannungsüberhöhung durch das zweite Kontrollelement 23 aus seiner Offenstellung geschaltet wird. Der Transistor 32 benötigt hierbei wenige Nanosekunden, um in die Schließstellung geschaltet zu werden. Für diese kurze Zeit nimmt der Kondensator 31 zumindest einen Teil der auftretenden Spannungsspitzen auf.

Befindet sich der Transistor 32 in der Schließstellung 34 wird der Kondensator 31 überbrückt und der Transistor 32 liegt im Stromfluss mit den restlichen, in Reihe geschalteten Zellen 11.

Erreicht das Kontaktelement 25 seine zweite Position II, bei der das Kontaktelement 25 gleichzeitig die zweite Einzelkontaktfläche 26.2 und die dritte Einzelkontaktfläche 26.3 berührt, befindet sich die Überwachungs-schaltung 20 in ihrem zweiten Schaltzustand 2, in dem die Zelle 11 aus dem restlichen Zellverbund energetisch getrennt ist. Hierbei ist der Kondensator 31 nahezu entladen. Der Transistor 32 befindet sich wieder in seiner Offenstellung 32.

Erkennt die Überwachungsschaltung 20, dass die Zelle 11 wieder in den Zellverbund zu schalten ist, wird über das erste Kontrollelement 22 der Antrieb 28 aktiviert, der wiederum das Kontaktelement 25 aus seiner zweiten Position II in seine erste Position I bewegt. Während der Bewegung des Kontaktelementes 25 in seine zweite Position II erfolgt wiederum eine Spannungserhöhung, die durch das zweite Kontrollelement 23 erkannt wird, wobei der Transistor 32 aus seiner Offenstellung 33 in die Schließstellung 34 geschaltet wird. Beim Weiterverschieben des Kontaktelementes 25 fließt der Strom nicht mehr über den Transistor 32, da dieser hochohmig ist. Befindet sich das Kontaktelement 25 in seiner ersten Position I, ist die Zelle 11 im Zellverbund mit den übrigen Zellen 11 wieder geschaltet. Die Überwachungsschaltung 20 befindet sich in ihrem ersten Schaltzustand 1.

Alternativ kann der zentrale Schalter 24 auch als Halbleiter oder Relais ausgeführt sein, welches nicht explizit dargestellt ist. Weiterhin kann vorgesehen sein, dass jede Zelle mit einem Speicher ausgeführt ist, welcher Daten für die aktuellen Betriebsparameter sowie die Vergleichsbetriebsparameter speichern kann. Die Überwachungsschaltung 20 kann in der jeweiligen Zelle 11 mitintegriert sein, so dass die Überwachungsschaltung 20 sowie die jeweilige Zelle 11 ein gemeinsames Bauteil bilden. Für den Ladevorgang der Akkumulatoreinheit 10 kann beispielsweise die Überwachungsschaltung 20 derart konfiguriert sein, dass jede Zelle 11 nur zusammen mit Zellen 11 gleichen Ladezustandes in Reihe geschaltet werden. Beim Erreichen des nächst höheren Ladezustandes werden über die Überwachungsschaltung 20 automatisch die anderen Zellen, die den nächst höheren Ladezustand aufweisen, dazu geschaltet. Es ist auch möglich, dass sich die Zellen 11 mit nahezu gleichem Ladezustand automatisch als erstes zusammenschalten, um die Zellen 11 auf den Ladezustand der nächsten Zellen 11 mit dem höheren Ladezustand anzuheben und sich dann mit diesen Zellen 11 zusammen weiter laden zu lassen, bis alle optimal aufgeladen sind. In diesem Fall organisieren sich die Zellen 11 selbst.

Ebenfalls ist es denkbar, dass eine zentrale Kontrolleinheit als Überwachungsschaltung 20 vorgesehen ist, die alle Betriebsparameter der Zellen 11 der Akkumulatoreinheit 10 erfasst und eine entsprechende Organisation für das Zuschalten und das Wegschalten einer oder mehrerer Zellen 11 übernimmt.

Beim Entladen kann die Überwachungsschaltung 20 derart konfiguriert sein, dass Zellen 11, die unterhalb eines grenzwertigen Ladezustandes (Betriebsparameter) sich befinden, automatisch aus dem Zellverbund getrennt werden. Hierdurch kann eine maximale energetische Ausnutzung der jeweiligen Zelle 11 erzielt werden, ohne diese etwaig beim Entladen zu zerstören. Gleichzeitig kann in dem Speicher der jeweiligen Zelle 11 jetzt die festgestellten minimalen und maximalen Werte für die erzielten Ampere-Stunden jeder Zelle 11 gespeichert werden. Bei der nächsten Ladung/Entladung der Akkumulatoreinheit 10 können diese Werte weiter optimiert werden. Durch diese Vorgehensweise erhält jede Zelle 11 ihre maximale Ladung, ohne die Gefahr einer Überladung entstehen zu lassen. Des Weiteren werden energetische Verluste weitestgehend vermieden. Die "schlechteste" Zelle 11 bestimmt nicht mehr die Kapazität der Gesamtanordnung der Akkumulatoreinheit 10. Bei der Entladung wird jede Zelle 11 maximal ausgenutzt, ohne dass im Zellverbund die schwächste Zelle 11 zu einer Gesamtabschaltung der Akkumulatoreinheit 10 führt. Die schwächsten Zellen 11 werden anschließend wieder optimal über die Überwachungsschaltung 20 aufgeladen, ohne etwaige Energie über Bypass-Schaltungen/Wandler-Schaltungen zu verlieren.

Ebenfalls ist es denkbar, Reservezellen vorzusehen, die während der Entladung, falls einige Zellen 11 sehr früh die Abschaltgrenze erreichen und somit aus dem Zellverbund getrennt werden, und diese Reservezellen dem restlichen Zellverbund zuzuschalten.

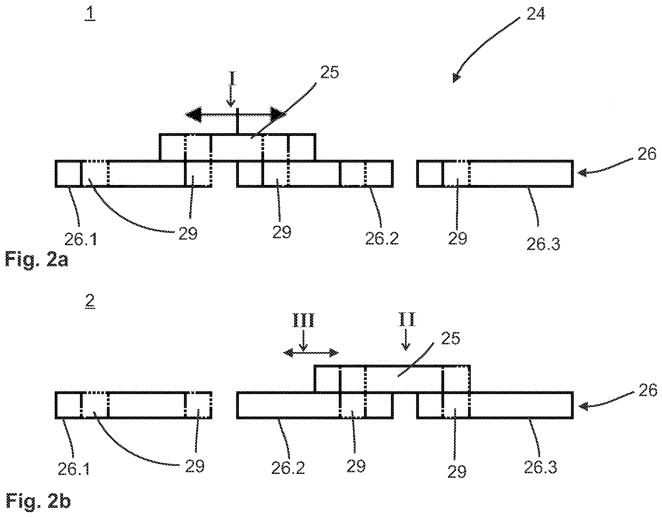

Damit die Schaltzustände 1, 2 der Überwachungsschaltung 20 zuverlässig ihre Position beibehalten, weisen die einzelnen Kontaktflächen 26.1, 26.2, 26.3 sowie das linear verschiebbare Kontaktelement 25 Magnetelemente 29 auf, die in Figur 2a und 2b gezeigt sind. Hierdurch wird die jeweilige Position I, II des Kontaktelementes 25 sowie der Schaltzustand 1, 2 der Überwachungsschaltung 20 zuverlässig beibehalten, ohne dass zusätzliche Energie notwendig ist. Die Magnetelemente 29 sind hierbei als Permanentmagnete ausgeführt, die im Kontaktelement 25 sowie in den einzelnen Kontaktflächen 26.1, 26.2, 26.3 integriert sind. Hierdurch kann der vorliegende zentrale Schalter 24 hohe Ströme aufnehmen, wobei gleichzeitig eine sichere Kontaktierung des Kontaktelementes 25 mit der Kontaktfläche 26 sichergestellt ist. Das Kontaktelement 25 kann über einen Antrieb, beispielsweise einen Elektromotor, in seine jeweilige Position I, II, III verschoben werden.

Gemäß Figur 1 ist schematisch ein Ladegerät 4 für den Ladevorgang der Akkumulatoreinheit 10 sowie ein Verbraucher 5 für den Entladevorgang der Akkumulatoreinheit 10 schematisch dargestellt.

### Bezugszeichenliste

- 1: erster Schaltzustand
- 2: zweiter Schaltzustand
- 3: dritter Schaltzustand
- 4: Ladegerät
- 5: Verbraucher
- 10: Akkumulatoreinheit
- 11: Zelle
- 20: Überwachungsschaltung
- 21: Kontrollelement
- 22: erstes Kontrollelement
- 23: zweites Kontrollelement
- 24: zentraler Schalter
- 25: Kontaktelement
- 26: Kontaktfläche
- 26.1: Einzelkontaktfläche
- 26.2: Einzelkontaktfläche
- 26.3: Einzelkontaktfläche
- 27: Abstand
- 28: Antrieb, Motor, Aktor
- 29: Magnetelement, Permanentmagnet
- 30: Schutzschaltung
- 31: Energiespeicher, Kondensator
- 32: Schaltelement, Transistor
- 33: Offenstellung
- 34: Schließstellung
- I: erste Position des Schalters 24
- II: zweite Position des Schalters 24
- III: dritte Position des Schalters 24

## Patentansprüche

1. Vorrichtung zum Betreiben, insbesondere zum Laden und/oder Entladen einer Akkumulatoreneinheit (10), die mehrere, in einem Zellverbund vorgesehenen Zellen (11) aufweist,
wobei jeder Zelle (11) eine Überwachungsschaltung (20) mit jeweils einer Schutzschaltung (30) zugeordnet ist,
wobei die Überwachungsschaltung (20) konfiguriert ist, mindestens einen Betriebsparameter der Zelle (11), der die Überwachungsschaltung (20) zugeordnet ist, zu überwachen,
in Abhängigkeit vom Betriebsparameter die Überwachungsschaltung (20) zwischen einem ersten Schaltzustand (1) und einem zweiten Schaltzustand (2) bringbar ist,
in dem ersten Schaltzustand (1) alle Zellen (11) einen gemeinsamen Strompfad bilden,
in dem zweiten Schaltzustand (2) mindestens eine Zelle (11) aus dem Zellverbund energetisch getrennt ist,
wobei die Überwachungsschaltung (20) zwischen dem ersten Schaltzustand (1) und dem zweiten Schaltzustand (2) einen dritten Schaltzustand (3) aufweist, in welchem die Schutzschaltung (30) aktivierbar ist, wobei die Zelle (11), bei der die Schutzschaltung (30) aktiviert ist, vom restlichen Zellverbund getrennt ist und gleichzeitig der Strompfad des restlichen Zellverbundes aufrechterhalten ist,
**dadurch gekennzeichnet,**
**dass** die Schutzschaltung (30) ein Schaltelement (32) aufweist, das zwischen einer Offenstellung (33) und einer Schließstellung (34) schaltbar ist, wobei im ersten Schaltzustand (1) und im zweiten Schaltzustand (2) der Überwachungsschaltung (20) das Schaltelement (32) sich in einer Offenstellung (33) befindet und im dritten Zustand (3) der Überwachungsschaltung (20) das Schaltelement (32) in die Schließstellung (34) bringbar ist,
wobei die Schutzschaltung (30) einen Energiespeicher (31) aufweist, der bei einem Wechsel zwischen der Offenstellung (33) und der Schließstellung (34) des Schaltelementes (32) kurzzeitig im Strompfad des Zellverbundes liegt, und der überbrückt ist, wenn das Schaltelement (32) die Schließstellung (34) erreicht.

2. Vorrichtung nach Anspruch 1,
**dadurch gekennzeichnet,**
**dass** die Überwachungsschaltung (20) ein Kontrollelement (21) aufweist, das den Schaltzustand (1,2,3) der Überwachungsschaltung (20) überwacht, und in Abhängigkeit vom Schaltzustand (1,2,3) der Überwachungsschaltung (20) das Schaltelement (32) steuert.

3. Vorrichtung nach einem der vorhergehenden Ansprüche,
**dadurch gekennzeichnet,**
**dass** eine zentrale Kontrolleinheit (21) vorgesehen ist, die mit allen Zellen (11) verbunden ist.

4. Vorrichtung nach einem der vorhergehenden Ansprüche,
**dadurch gekennzeichnet,**
**dass** die Überwachungsschaltung (20) einen zentralen Schalter (24) aufweist, mit dem die Überwachungsschaltung (20) zwischen dem ersten Schaltzustand (1) und dem zweiten Schaltzustand (2) bringbar ist, wobei zentrale Schalter (24) als Halbleiter oder Relais ausgeführt ist, oder wobei zentrale Schalter (24) ein Kontaktelement (25) und eine Kontaktfläche (26) aufweist, entlang dieser das Kontaktelement (25) verschiebbar gelagert ist.

5. Vorrichtung nach Anspruch 4,
**dadurch gekennzeichnet,**
**dass** das Kontaktelement (25) zwischen einer ersten (I) und einer zweiten Position (II) bewegbar ist, das Kontaktelement (25) über einen Antrieb (28) bewegbar ist.

6. Vorrichtung nach Anspruch 5,
**dadurch gekennzeichnet,**
**dass** der Antrieb (28) einen Elektromotor, einen Piezomotor, einen Linearmotor oder einen Magnetschalter aufweist.

7. Vorrichtung nach Anspruch 4 bis 6,
**dadurch gekennzeichnet,**
**dass** das Kontaktelement (25) und/oder die Kontaktfläche (26) Magnetelemente (29) aufweist, insbesondere die Magnetelemente (29) als Permanentmagnete ausgeführt sind, die im Kontaktelement (25) und/oder in der Kontaktfläche (26) integriert sind.

8. Vorrichtung nach einem der vorhergehenden Ansprüche,
**dadurch gekennzeichnet,**
**dass** die einzelne Zelle (11) und die Überwachungsschaltung (20) in einem gemeinsamen Bauteil integriert sind.

9. Vorrichtung nach einem der vorhergehenden Ansprüche,
**dadurch gekennzeichnet,**
**dass** ein Ladegerät (4) und/oder ein Verbraucher (5) mit der Überwachungsschaltung (20) verbunden ist.

10. Verfahren zum Betrieb, insbesondere zum Laden und/oder Entladen einer Akkumulatoreneinheit (10), die mehrere, in einem Zellverbund vorgesehenen Zellen (11) aufweist,
wobei jeder Zelle (11) eine Überwachungsschaltung (20) mit jeweils einer Schutzschaltung (30) zugeordnet ist,
wobei die Überwachungsschaltung (20) mindestens einen Betriebsparameter der Zelle (11), der die Überwachungsschaltung (20) zugeordnet ist, überwacht,
in Abhängigkeit vom Betriebsparameter die Überwachungsschaltung (20) zwischen einem ersten Schaltzustand (1) und einem zweiten Schaltzustand (2) bringbar ist,
in dem ersten Schaltzustand (1) alle Zellen (11) einen gemeinsamen Strompfad bilden,
die Überwachungsschaltung (20) in ihrem zweiten Schaltzustand (2) mindestens eine Zelle (11) aus dem Zellverbund energetisch trennt,
wobei die Überwachungsschaltung (20) zwischen dem ersten Schaltzustand (1) und dem zweiten Schaltzustand (2) in einen dritten Schaltzustand (3) gebracht wird, in welchem die Schutzschaltung (30) aktiviert wird, wobei die Zelle (11), bei der die Schutzschaltung (30) aktiviert ist, vom restlichen Zellverbund getrennt ist und gleichzeitig der Strompfad des restlichen Zellverbundes aufrechterhalten ist,
**dadurch gekennzeichnet,**
**dass** die Schutzschaltung (30) ein Schaltelement (32) aufweist, das zwischen einer Offenstellung (33) und einer Schließstellung (34) geschaltet wird, wobei im ersten Schaltzustand (1) und im zweiten Schaltzustand (2) der Überwachungsschaltung (20) das Schaltelement (32) sich in einer Offenstellung (33) befindet und im dritten Zustand (3) der Überwachungsschaltung (20) das Schaltelement (32) in die Schließstellung (34) bringbar ist,
wobei die Schutzschaltung (30) einen Energiespeicher (31) aufweist, der bei einem Wechsel zwischen der Offenstellung (33) und der Schließstellung (34) des Schaltelementes (32) kurzzeitig im Strompfad des Zellverbundes liegt, und der überbrückt ist, wenn das Schaltelement (32) die Schließstellung (34) erreicht.

11. Verfahren nach Anspruch 10,
**dadurch gekennzeichnet,**
**dass** beim Laden der Akkumulatoreneinheit (10) die Überwachungsschaltung (20) derart betrieben wird, dass jede Zelle (11) zusammen mit Zellen (11) gleichen Ladezustand in Reihe geschaltet ist, wobei insbesondere anfangend mit den Zellen (11), die einen geringen Ladezustand aufweisen, das Laden betrieben wird, wobei bei einem Erreichen eines nächst höheren Ladezustandes einer mindestens weiteren, noch nicht geladenen Zelle (11), diese noch nicht geladene Zelle (11) durch die Überwachungsschaltung (20) für das Laden hinzugeschaltet wird.

12. Verfahren nach einem der vorhergehenden Ansprüche,
**dadurch gekennzeichnet,**
**dass** beim Entladen der Akkumulatoreneinheit (10) die Überwachungsschaltung (20) mindestens eine Zelle (11) aus dem Zellverbund trennt, die einen minimalen Ladezustand aufweist.

13. Verfahren nach einem der vorhergehenden Ansprüche,
**dadurch gekennzeichnet,**
**dass** Reservezellen vorgesehen sind, wobei mindestens eine Reservezelle von der Überwachungsschaltung (20) in den Zellverbund hinzugeschaltet wird, wenn die Überwachungsschaltung (20) mindestens eine Zelle (11) aus dem Zellverbund trennt, die einen minimalen Ladezustand aufweist.

14. Verfahren nach einem der vorhergehenden Ansprüche,
**dadurch gekennzeichnet,**
**dass** die Betriebsparameter optisch und/oder über Funk und/oder über wenigstens einen Lichtwellenleiter übertragen werden.

15. Verfahren nach einem der vorhergehenden Ansprüche,
**dadurch gekennzeichnet,**
**dass** jede Zelle (11) ihre Betriebsparameter direkt den übrigen Zellen (11) des Zellverbundes übermittelt und/oder dass jede Zelle (11) ihre eigenen Betriebsparameter sowie die Betriebsparameter der übrigen Zellen (11) speichert.

## Claims

1. A device for operating, in particular charging and/or discharging an accumulator unit (10) that comprises multiple cells (11) provided in a cell assembly,
wherein a monitoring circuit (20) each having a protective circuit (30) is assigned to each cell (11),
wherein the monitoring circuit (20) is configured to monitor at least one operating parameter of the cell (11), to which the monitoring circuit (20) is assigned,
the monitoring circuit (20) can be brought between a first switch state (1) and a second switch state (2) depending on the operating parameter,
all cells (11) form a common current path in the first switch state (1),
at least one cell (11) of the cell assembly is energetically disconnected in the second switch state (2),
wherein the monitoring circuit (20) comprises a third switch state (3) between the first switch state (1) and the second switch state (2), in which the protective circuit (30) can be activated, wherein the cell (11), in which the protective circuit (30) is activated, is disconnected from the remaining cell assembly and, at the same time, the current path of the remaining cell assembly is maintained,
**characterized in that**
the protective circuit (30) comprises a switch element (32), which is switchable between an open position (33) and a closed position (34), wherein the switch element (32) is in an open position (33) in the first switch state (1) and in the second switch state (2) of the monitoring circuit (20), and the switch element (32) can be brought to the closed position (34) in the third state (3) of the monitoring circuit (20),
wherein the protective circuit (30) comprises an energy storage (31), which is located in the current path of the cell assembly for a short period of time during a change between the open position (33) and the closed position (34) of the switch element (32), and which is bridged when the switch element (32) reaches the closed position (34).

2. The device according to claim 1,
**characterized in that**
the monitoring circuit (20) comprises a control element (21), which monitors the switch state (1, 2, 3) of the monitoring circuit (20), and controls the switch element (32) depending on the switch state (1, 2, 3) of the monitoring circuit (20).

3. The device according to one of the preceding claims,
**characterized in that**
a central control unit (21) is provided, which is connected to all cells (11).

4. The device according to one of the preceding claims,
**characterized in that**
the monitoring circuit (20) comprises a central switch (24), by means of which the monitoring circuit (20) can be brought between the first switch state (1) and the second switch state (2), wherein the central switch (24) is configured as a semiconductor or as a relay, or wherein the central switch (24) comprises a contact element (25) and a contact surface (26), along which the contact element (25) is mounted to be displaceable.

5. The device according to claim 4,
**characterized in that**
the contact element (25) is moveable between a first (I) and a second (II) position, the contact element (25) is moveable through a drive (28).

6. The device according to claim 5,
**characterized in that**
the drive (28) comprises an electric motor, a piezo motor, a linear motor or a magnetic switch.

7. The device according to claim 4 to 6,
**characterized in that**
the contact element (25) and/or the contact surface (26) comprises magnetic elements (29), in particular the magnetic elements (29) are configured as permanent magnets that are integrated in the contact element (25) and/or in the contact surface (26).

8. The device according to one of the preceding claims,
**characterized in that**
the individual cell (11) and the monitoring circuit (20) are integrated in a common component.

9. The device according to one of the preceding claims,
**characterized in that**
a charging device (4) and/or a consumer (5) is connected to the monitoring circuit (20).

10. A method for operating, in particular for charging and/or discharging an accumulator unit (10) comprising multiple cells (11) provided in a cell assembly,
wherein a monitoring circuit (20) having in each case one protective circuit (30) is assigned to each cell (11),
wherein the monitoring circuit (20) monitors at least one operating parameter of the cell (11) to which the monitoring circuit (20) is assigned,
the monitoring circuit (20) can be brought between a first switch state (1) and a second switch state (2) depending on the operating parameter,
all cells (11) form a common current path in the first switch state (1), the monitoring circuit (20), in the second switch state (2) thereof, energetically disconnects at least one cell (11) from the cell assembly,
wherein the monitoring circuit (20) is brought in a third switch state (3) between the first switch state (1) and the second switch state (2), in which the protective circuit (30) is activated, wherein the cell (11) having the protective circuit (30) activated, is disconnected from the remaining cell assembly and, at the same time, the current path of the remaining cell assembly is maintained,
**characterized in that**
the protective circuit (30) comprises a switch element (32), which is switched between an open position (33) and a closed position (34), wherein the switch element (32) is in an open position (33) in the first switch state (1) and in the second switch state (2) of the monitoring circuit (20), and the switch element (32) can be brought to the closed position (34) in the third state (3) of the monitoring circuit (20),
wherein the protective circuit (30) comprises an energy storage (31), which is located in the current path of the cell assembly for a short time period during a change between the open position (33) and the closed position (34) of the switch element (32), and which is bridged when the switch element (32) reaches the closed position (34).

11. The method according to claim 10,
**characterized in that**
while charging the accumulator unit (10), the monitoring circuit (20) is operated in such a manner that each cell (11) is connected in series with cells (11) of the same charging state, wherein charging is performed as to start in particular with cells (11) having a low charging state, wherein when reaching a next higher charging state of at least one further, not yet charged cell (11), said not yet charged cell (11) is connected by the monitoring circuit (20) for the charging.

12. The method according to one of the preceding claims,
**characterized in that**
when discharging the accumulator unit (10), the monitoring circuit (20) disconnects at least one cell (11) from the cell assembly that has a minimal charging state.

13. The method according to one of the preceding claims,
**characterized in that**
reserve cells are provided, wherein at least one reserve cell is connected into the cell assembly by the monitoring circuit (20), when the monitoring circuit (20) disconnects at least one cell (11) from the cell assembly that has a minimum charging state.

14. The method according to one of the preceding claims,
**characterized in that**
the operating parameters are transmitted optically and/or via radio communication and/or via at least one light wave guide.

15. The method according to one of the preceding claims,
**characterized in that**
each cell (11) transmits its operating parameters directly to the remaining cells (11) of the cell assembly and/or that each cell (11) stores its own operating parameters as well as the operating parameters of the remaining cells (11).

## Revendications

1. Dispositif destiné à faire fonctionner, notamment à charger et/ou à décharger une unité d'accumulateur (10) présentant une pluralité de cellules (11) prévues au sein d'un réseau de cellules,
un circuit de surveillance (20) étant assigné à chaque cellule (11) avec à chaque fois un circuit de protection (30),
le circuit de surveillance (20) étant configuré pour surveiller au moins un paramètre de fonctionnement de la cellule (11) à laquelle le circuit de surveillance (20) est assigné,
en fonction du paramètre de fonctionnement, le circuit de surveillance (20) pouvant être mis entre un premier état de commutation (1) et un deuxième état de commutation (2), toutes les cellules (11) formant un trajet de courant commun dans le premier état de commutation (1), au moins une cellule (11) étant énergiquement séparée du réseau de cellules dans le deuxième état de commutation (2),
le circuit de surveillance (20) présentant, entre le premier état de commutation (1) et le deuxième état de commutation (2), un troisième état de commutation (3), dans lequel le circuit de protection (30) peut être activé, la cellule (11), pour laquelle le circuit de protection (30) est activé, étant séparée du reste du réseau de cellules et en même temps le trajet de courant du reste du réseau de cellules étant maintenu,
**caractérisé en ce que**
le circuit de protection (30) comprend un élément de commutation (32) qui peut être commuté entre une position ouverte (33) et une position fermée (34), l'élément de commutation (32) se trouvant en position ouverte (33) dans un premier état de commutation (1) et dans un deuxième état de commutation (2) du circuit de surveillance (20) et l'élément de commutation (32) pouvant être mis dans la position fermée (34), dans le troisième état (3) du circuit de surveillance (20),
le circuit de protection (30) présentant une réserve énergétique (31) qui, en cas d'un changement entre la position ouverte (33) et la position fermée (34) de l'élément de commutation (32), se situe pour une courte période de temps dans le trajet de courant du réseau de cellules, et qui est ponté lorsque l'élément de commutation (32) atteint la position fermée (34).

2. Dispositif selon la revendication 1,
**caractérisé en ce que**
le circuit de surveillance (20) comprend un élément de contrôle (21) qui surveille l'état de commutation (1, 2, 3) du circuit de surveillance (20), et qui commande, en fonction de l'état de commutation (1, 2, 3) du circuit de surveillance (20), l'élément de commutation (32).

3. Dispositif selon l'une quelconque des revendications précédentes,
**caractérisé en ce**
**qu'**une unité de contrôle centrale (21), reliée à toutes les cellules (11), est prévue.

4. Dispositif selon l'une quelconque des revendications précédentes,
**caractérisé en ce que**
le circuit de surveillance (20) comprend un commutateur central (24), grâce auquel le circuit de surveillance (20) peut être mis entre le premier état de commutation (1) et le deuxième état de commutation (2), ledit commutateur central (24) conçu comme un semi-conducteur ou un relais, ou ledit commutateur central (24) présentant un élément de contact (25) et une surface de contact (26), le long de laquelle l'élément de contact (25) est monté de manière coulissante.

5. Dispositif selon la revendication 4,
**caractérisé en ce que**
l'élément de contact (25) peut être déplacé entre une première (I) et une deuxième (II) positions et **en ce que** l'élément de contact (25) peut être déplacé au moyen d'un entraînement (28).

6. Dispositif selon la revendication 5,
**caractérisé en ce que**
l'entraînement (28) comprend un moteur électrique, un moteur piézo-électrique, un moteur linéaire ou un commutateur magnétique.

7. Dispositif selon la revendication 4 à 6,
**caractérisé en ce que**
l'élément de contact (25) et/ou la surface de contact (26) présentent des éléments magnétiques (29), **en ce que** notamment les éléments magnétiques (29) sont conçus sous forme des aimants permanents qui sont intégrés dans l'élément de contact (25) et/ou dans la surface de contact (26).

8. Dispositif selon l'une quelconque des revendications précédentes,
**caractérisé en ce que**
la cellule individuelle (11) et le circuit de surveillance (20) sont intégrés dans un composant commun.

9. Dispositif selon l'une des revendications précédentes,
**caractérisé en ce**
**qu'**un dispositif de chargement (4) et/ou un consommateur (5) sont reliés au circuit de surveillance (20).

10. Procédé destiné à faire fonctionner, notamment à charger et/ou à décharger une unité d'accumulateur (10) présentant une pluralité de cellules (11) prévues au sein d'un réseau de cellules,
un circuit de surveillance (20) étant assigné à chaque cellule (11) avec à chaque fois un circuit de protection (30),
le circuit de surveillance (20) surveillant au moins un paramètre de fonctionnement de la cellule (11) à laquelle le circuit de surveillance (20) est assigné,
en fonction du paramètre de fonctionnement, le circuit de surveillance (20) pouvant être mis entre un premier état de commutation (1) et un deuxième état de commutation (2), toutes les cellules (11) formant un trajet de courant commun dans le premier état de commutation (1),
le circuit de surveillance (20) séparant énergiquement au moins une cellule (11) du réseau de cellules dans son deuxième état de commutation (2),
le circuit de surveillance (20) étant mis, entre le premier état de commutation (1) et le deuxième état de commutation (2), dans un troisième état de commutation (3), dans lequel le circuit de protection (30) est activé, la cellule (11), pour laquelle le circuit de protection (30) est activé, étant séparée du reste du réseau de cellules et en même temps le trajet de courant du reste du réseau de cellules étant maintenu,
**caractérisé en ce que**
le circuit de protection (30) comprend un élément de commutation (32) qui est commuté entre une position ouverte (33) et une position fermée (34), l'élément de commutation (32) se trouvant dans une position ouverte (33) dans le premier état de commutation (1) et dans le deuxième état de commutation (2) du circuit de surveillance (20), et l'élément de commutation (32) pouvant être mis dans la position fermée (34), dans le troisième état (3) du circuit de surveillance (20),
le circuit de protection (30) présentant une réserve énergétique (31) qui, en cas d'un changement entre la position ouverte (33) et la position fermée (34) de l'élément de commutation (32), se trouve dans le trajet de courant du réseau de cellules pour une courte période de temps, et qui est pontée lorsque l'élément de commutation (32) atteint la position fermée (34).

11. Procédé selon la revendication 10,
**caractérisé en ce que**
pendant le chargement de l'unité d'accumulateur (10), le circuit de surveillance (20) est actionné de sorte que chaque cellule (11) soit connecté en série, avec des cellules (11) présentant le même état de charge, le chargement étant actionné en commençant notamment par les cellules (11), qui ont un état de charge faible ; lorsque le niveau de charge suivant d'une au moins autre cellule (11) non encore chargée est atteint, cette cellule pas encore chargée (11) est commutée pour le chargement par le circuit de surveillance (20).

12. Procédé selon l'une quelconque des revendications précédentes,
**caractérisé en ce que**
lors de la décharge de l'unité d'accumulateur (10), le circuit de surveillance (20) sépare du réseau de cellules au moins une cellule (11) présentant un état de charge minimum.

13. Procédé selon l'une quelconque des revendications précédentes,
**caractérisé en ce que**
des cellules de réserve sont prévues, au moins une cellule de réserve étant commutée par le circuit de surveillance (20) dans le réseau de cellules lorsque le circuit de surveillance (20) sépare du réseau de cellules au moins une cellule (11) présentant un état de charge minimum.

14. Procédé selon l'une quelconque des revendications précédentes,
**caractérisé en ce que**
les paramètres de fonctionnement sont transmis de manière optique et/ou par radio et/ou par au moins une fibre optique.

15. Procédé selon l'une quelconque des revendications précédentes,
**caractérisé en ce que**
chaque cellule (11) transmet ses paramètres de fonctionnement directement aux cellules restantes (11) du réseau de cellules et/ou **en ce que** chaque cellule (11) enregistre ses propres paramètres de fonctionnement ainsi que les paramètres de fonctionnement des cellules restantes (11).
